# EUROPÄISCHE PATENTSCHRIFT

(11) **EP 0 818 614 B1**
(45) Veröffentlichungstag und Bekanntmachung des Hinweises auf die Patenterteilung: **27.03.2002**
(21) Anmeldenummer: 97110982.2
(22) Anmeldetag: 02.07.1997
(51) Int. Cl.: F01N 3/28

(54) **Katalysator für die Abluftreinigung**
Catalytic converter for the purification of exhaust air
Catalyseur pour la purification d'air d'échappement

(30) Priorität: 09.07.1996 DE 19627609
(43) Veröffentlichungstag der Anmeldung: 14.01.1998
(73) Patentinhaber: Schäffer, Johann, 63571 Gelnhausen-Meerholz (DE)
(72) Erfinder: Schäffer, Johann, 63571 Gelnhausen-Meerholz (DE)
(74) Vertreter: Wolf, Günter, Dipl.-Ing.

(56) Entgegenhaltungen:
- DE-B- 1 138 380
- DE-C- 4 339 686

## Beschreibung

Die Erfindung betrifft einen Katalysator für die Abluftreinigung gemäß Oberbegriff des Patentanspruches.

Bei Katalysatoren mit einer elektrischen Vorheizung zur Reduzierung des Schadstoffausstoßes in der Startphase ist es bekannt, diese mit einer elektrischen Vorheizung auszustatten. So ist nach der DE-A-43 39 686 ein elektrisch beheizbarer Katalysator bekannt, bei dem ein von einem hochtemperaturbeständigen und katalytisch wirkenden Fasergestrick umwickelter Heizdraht die für die katalytische Reaktion erforderliche Temperatur schon beim Betriebsstart des Katalysators bewirkt. Bei dieser speziellen Bauart muß also zunächst der elektrische Leiter mit dem katalytisch wirkenden Fasergestrick versehen werden, wobei dann ein derart vorbereiteter, einen Strang bildender Leiter abschnittsweise in parallelen Lagen gewissermaßen als Bündel zusammengefaltet werden muß, um einen durchströmbaren Katalysatorblock zu bilden. In Betracht gezogen ist dabei auch eine wendel- oder spiralförmige Verformung oder auch eine Zusammenlegung aus getrennten Leitungsabschnitten, die dann elektrisch zusammengeschaltet werden müssen.

Für die weitaus häufigere Form eines blockartigen Katalysators aus Keramik mit einer Vielzahl von Durchströmkanälen in dichter Anordnung ist diese Methode auf der Hand liegend, jedoch nicht geeignet, um einen solchen Katalysator mit einem Heizleiter als Starthilfe auszustatten, bei dem der Heizleiter durch die Vielzahl der Kanäle mäandernd eingefädelt werden müßte.

Der Erfindung liegt demgemäß und ausgehend von einem in seiner geometrischen Form vorgegebenen und eine Vielzahl von Durchströmkanälen aufweisenden Katalysator die Aufgabe zugrunde, einen solchen Katalysator mit einem Heizleiter zur Verbesserung des Anspringverhaltens beim Kaltstart zweckmäßig und rationell bestücken zu können.

Diese Aufgabe ist mit einem Katalysator der eingangs genannten Art nach der Erfindung dadurch gelöst, daß der Heizleiterwiderstand in Form einer Vielzahl einzelner von u-förmigen Heizleiterteilstücke ausgebildet ist, die im wesentlichen gleichmäßig über den Querschnitt des als ein- oder mehrteiliger Block ausgebildeten Keramikkörpers verteilt mit ihren Schenkeln die Durchströmkanäle des Blockes von einer Seite aus hindurchgeführt sind, wobei die aus dem Keramikkörper auf der anderen Seite herausragenden Enden der u-förmigen Heizleiterteilstücke jeweils benachbarter Heizleiterstücke zu einem einsträngigen Heizleiterwiderstand verbunden sind.

Im Endzustand liegt also bei diesem erfindungsgemäßen Katalysator ebenfalls ein den Katalysatorblock bzw. dessen Durchströmkanäle mäandernd durchgreifender Heizleiterwiderstand vor, der aber, und das ist der wesentliche Vorteil, nicht von Durchströmkanal zu Durchströmkanal wechselnd, mit seiner erforderlichen Gesamtlänge eingefädelt werden muß, was einerseits von Hand zu bewerkstelligen außerordentlich zeitaufwendig und damit viel zu kostenträchtig wäre, und andererseits, wollte man dies maschinell bewirken, eine komplizierte Einfädelmaschine verlangte, die, falls überhaupt zu vertretbaren Kosten erstellbar, neben ihren Konstruktionselementen eine aufwendige Steuerung erforderte. Dies dürfte der Grund für die Ausbildung eines Katalysators im Sinne der vorerwähnten DE-A-43 39 686 gewesen sein, der aber insoweit einen Katalysator besonderer Art darstellt.

Durch die erfindungsgemäße Ausbildung des Katalysators, und hierbei insbesondere des Heizleiters, löst sich die an sich schwierige Einbringung des Heizleiters in maschinell einfach zu beherrschende Vorgänge auf, nämlich Herstellung u-förmiger Heizleiterstücke, die in einer einfachen Hilfsvorrichtung im erforderlichen Raster vorgeordnet einfach in die Kanäle des Katalysatorblockes eingeschoben werden, wonach lediglich noch die Verbindung benachbarter Enden der Heizleiterteilstücke zu erfolgen hat.

Der erfindungsgemäße Katalysator wird nachfolgend anhand der zeichnerischen Darstellung eines Ausführungsbeispieles näher erläutert.

Es zeigt
- Fig. 1: perspektivisch den Katalysator mit dem eingebauten Heizleiterwiderstand;
- Fig. 2: den Katalysator gemäß Fig. 1 in Ansicht, und zwar in Pfeilrichtung A;
- Fig. 3: in Seitenansicht ein Heizleiterteilstück;
- Fig. 4: schematisch den aus den Heizleiterteilstücken gemäß Fig. 3 zusammengefügten gesamten Heizleiterwiderstand und
- Fig. 5: schematisch die Verwendung des Katalysators in einem Abluftreinigungssystem.

Der insbesondere für Abluftreinigung bestimmte Katalysator besteht nach wie vor aus einem katalytisch wirkenden Keramikkörper 1, dessen katalytisch wirkende Fläche aus einer Vielzahl von im Keramikkörper angeordneten Durchströmkanälen 3 gebildet und der mit einem elektrischen, durch die Durchströmkanäle hindurchgeführten Heizleiterwiderstand 2 für die Aufheizung des Keramikkörpers auf katalytische "Zündtemperatur" versehen ist.

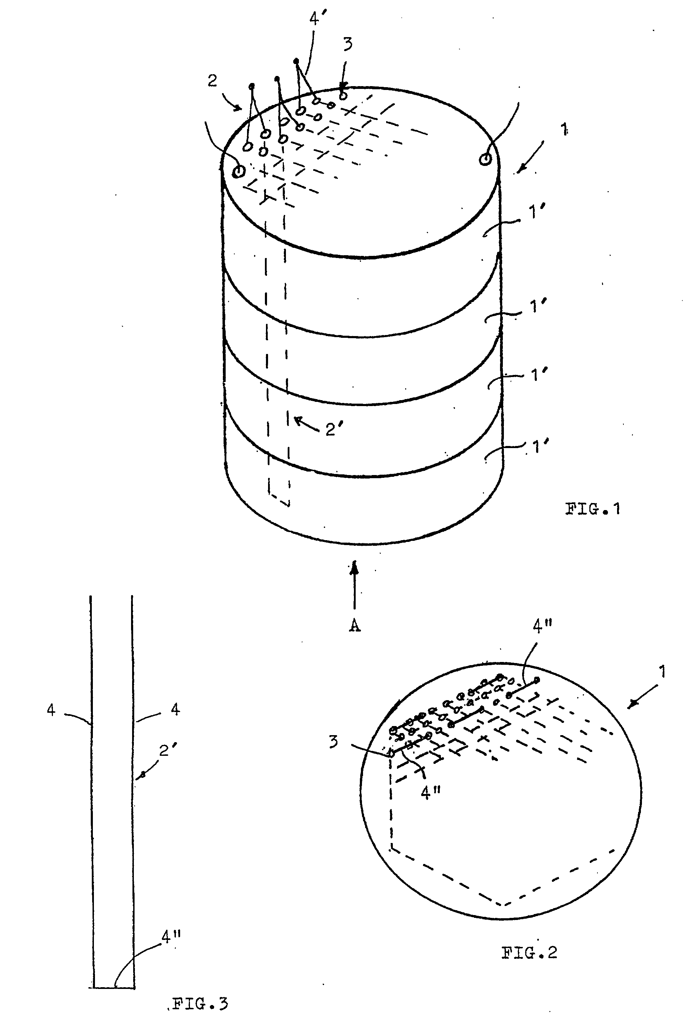

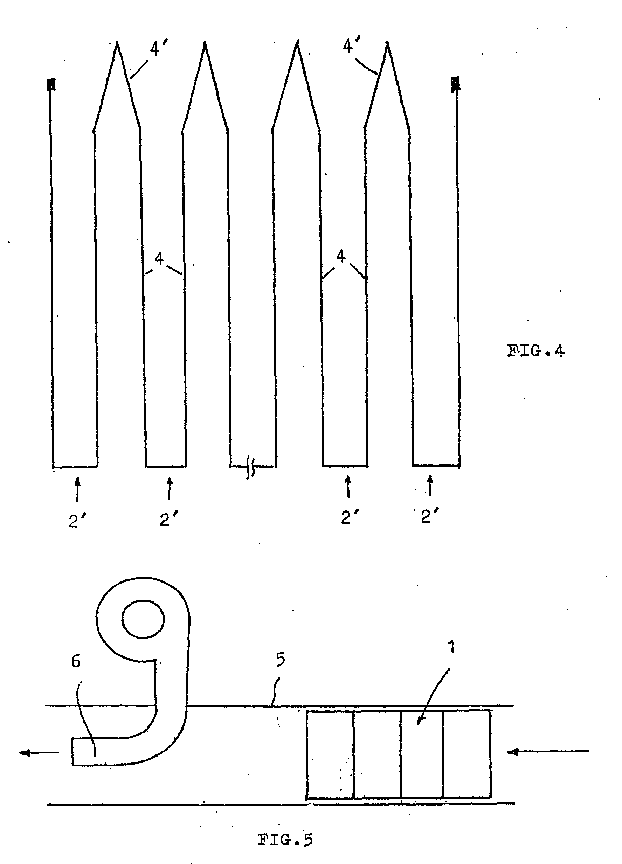

Für einen solchen Katalysator, dessen Block bzw. Keramikkörper 1 auch aus mehreren identischen Teilstücken 1' gebildet sein kann, ist nun wesentlich, daß der Heizleiterwiderstand 2 in Form einer Vielzahl einzelner, u-förmigen Heizleiterteilstücke 2' (siehe Fig. 2) ausgebildet ist, die im wesentlichen gleichmäßig über den Querschnitt des als ein- oder mehrteiliger Block ausgebildeten Keramikkörpers 1 verteilt (siehe Fig. 2) mit ihren Schenkeln 4 durch die Durchströmkanäle 3 des Blockes von einer Seite aus hindurchgeführt sind, wobei die aus dem Keramikkörper 1 auf der anderen Seite herausragenden Enden 4' (siehe Fig. 1) der u-förmigen Heizleiterteilsstücke 2' jeweils benachbarter Heizleiterteilstücke 2' zu einem einsträngigen Heizleiterwiderstand 2 (siehe Fig. 4) verbunden sind.

Beim etwa im Maßstab 1:1 dargestellten Ausführungsbeispiel des Keramikkörpers 1 wären ca. 11 m Heizleiterwiderstand 2 in den Katalysatorblock, der etwa 450 Durchströmkanäle 3 aufweist, einzubringen. Diese 11 m Heizleiterwiderstand 2 werden aber nun zunächst in einzelne, u-förmige Heizleiter 2' gemäß Fig. 3 aufgeteilt und in dieser Form mit einer Verteilung gemäß Fig. 2 in die Kanäle 3 eingeschoben und auf der anderen Seite (siehe Fig. 1) in geeigneter Weise elektrisch leitend verbunden. Die Basisstege 4" der Heizleiterteilstücke 2' stellen sich dabei gleichmäßig über den Querschnitt des Keramikkörpers verteilt und wie in Fig. 2, von der Einschubseite her gesehen, verdeutlicht dar. Nur der Vollständigkeit halber ist in Fig. 5 ein Anwendungsbeispiel dargestellt.

Da ein solcher Katalysator mit hoher Temperatur betrieben werden muß, ist dessen Verwendung vorteilhaft in einem Gesamtsystem gemäß Fig. 5 vorgesehen, d.h., dieser ist in einem Abluft- bzw. Abgasförderrohr 5 angeordnet, in dem dem Keramikkörper 1 ein Frischluftinjektor 6 nachgeschaltet ist, der die zu reinigende Abluft durch den Katalysator saugt, d.h., das Gebläse selbst ist nicht dem heißen Abluftstrom ausgesetzt.

## Patentansprüche

1. Katalysator für die Abluftreinigung, bestehend aus einem katalytisch wirkenden Keramikkörper (1), dessen katalytisch wirkende Fläche aus einer Vielzahl von im Keramikkörper angeordneten Durchströmkanälen (3) gebildet und der mit einem elektrischen, durch die Durchströmkanäle (3) hindurchgeführten Heizleiterwiderstand (2) für die Aufheizung des Keramikkörpers auf katalytische "Zündtemperatur" versehen ist,
**dadurch gekennzeichnet,**
**daß** der Heizleiterwiderstand (2) in Form einer Vielzahl einzelner, u-förmiger Heizleiterteilstücke_ (2') ausgebildet ist, die im wesentlichen gleichmäßig über den Querschnitt des als ein- oder mehrteiliger Block ausgebildeten Keramikkörpers (1) verteilt mit ihren Schenkeln (4) durch die Durchströmkanäle (3) des Blockes von einer Seite aus hindurchgeführt sind, wobei die aus dem Keramikkörper (1) auf der anderen Seite des Blockes herausragenden Enden (4') der u-förmigen Heizleiterteilstücke (2') jeweils benachbarter Heizleiterstücke (2') zu einem einsträngigen Heizleiterwiderstand (2) verbunden sind.

## Claims

1. A catalyst for purifying exhaust air, comprising a ceramic element 1 acting as a catalyst, whose catalytically acting surface is formed of a plurality of through-flow passageways (3) arranged within the ceramic element, and which is provided with an electric heating resistor (2) passed through the through-flow passageways (3) for heating the ceramic element to the catalytic "ignition temperature",
**characterized in that** the heating resistor (2) is designed in the form of a plurality of individual u-shaped heating conductor sections (2') which are substantially uniformly distributed across the cross-section of the ceramic element (1) designed as a one-piece or multi-part block and with the legs (4) thereof, from one side, are guided through the through-flow passageways (3) of the block, with the ends (4') of the u-shaped heating conductor sections (2') of respectively adjacent heating conductor sections (2') protruding on the other side of the block from the ceramic element (1) being connected to form one mono-cable heating resistor (2).

## Revendications

1. Catalyseur pour l'épuration de l'air vicié, constitué par un corps en céramique (1) à effet catalytique dont la surface à effet catalytique est formée par une multitude de conduits de passage (3) placés dans le corps en céramique et qui est pourvue d'une résistance électrique de conducteur chauffant (2) traversée par les conduits de passage (3) pour le chauffage du corps en céramique à la "température d'ignition" catalytique,
**caractérisé en ce**
**que** la résistance de conducteur chauffant (2) est configurée en forme d'une multitude de tronçons individuels de conducteur chauffant en forme d'U (2') qui, tout en étant répartis substantiellement uniformément sur la section du corps en céramique (1) configuré comme un bloc en une ou en plusieurs parties, traversent avec leurs montants (4) les conduits de passage (3) du bloc par un côté, les extrémités (4') des tronçons de conducteur chauffant en forme d'U (2') des tronçons de conducteur chauffant respectivement voisins (2'), extrémités qui font saillie du corps en céramique (1) de l'autre côté, étant reliées en une résistance de conducteur chauffant à un brin (2).
